# EUROPÄISCHE PATENTANMELDUNG

(11) **EP 3 247 023 A1**
(43) Veröffentlichungstag der Anmeldung: **22.11.2017**
(21) Anmeldenummer: 16170135.4
(22) Anmeldetag: 18.05.2016
(51) Int. Cl.: H02K 1/26

(54) **DREHSTROMGENERATOR SOWIE SYSTEM UND ANLAGE ZUM ERZEUGEN EINER DREIPHASENWECHSELSPANNUNG**

(71) Anmelder: Siemens Aktiengesellschaft, 80333 München (DE)
(72) Erfinder: Jäkel, Christian, 47169 Duisburg (DE); Klocke, Meinolf, 58452 Witten (DE); Lehmann, Christoph, 47506 Neukirchen-Vluyn (DE); Pieczyk, Marian-Peter, 45476 Mülheim a.d. Ruhr (DE); Romanowski, Holger, 47055 Duisburg (DE); Schmahl, Milan, 45479 Mülheim an der Ruhr (DE)

(57) **Zusammenfassung**

Die Erfindung betrifft einen Drehstromgenerator für eine Anlage zum Erzeugen einer Dreiphasenwechselspannung, aufweisend einen zweipoligen Rotor mit zwei magnetischen Polen, wobei die magnetischen Pole bezüglich einer Rotordrehachse des Rotors ungleichmäßig umfangsversetzt zueinander angeordnet sind.

## Beschreibung

Die Erfindung betrifft einen Drehstromgenerator für eine Anlage zum Erzeugen einer Dreiphasenwechselspannung, aufweisend einen zweipoligen Rotor mit zwei magnetischen Polen.

Des Weiteren betrifft die Erfindung ein System und eine Anlage zum Erzeugen einer Dreiphasenwechselspannung.

Anlagen zum Erzeugen einer Dreiphasenwechselspannung und zum Versorgen eines Stromnetzes mit der Dreiphasenwechselspannung sind hinlänglich bekannt und werden in Kraftwerken eingesetzt. Eine solche Anlage kann wenigstens eine Turbine und wenigstens einen mit der Turbine angetriebenen Drehstromgenerator, insbesondere Turbogenerator, aufweisen. Die Turbine kann beispielsweise eine Gasturbine eines Gas-und-Dampfturbinen-Kraftwerks (GuD) oder eines Gasturbinen-Kraftwerks oder eine Dampfturbine eines Dampfturbinenkraftwerks sein.

Ein Turbinenläufer der Turbine ist herkömmlich starr bzw. drehfest mit einem Rotor des Drehstromgenerators verbunden. Um durch eine Rotation des Turbinenläufers eine Dreiphasenwechselspannung mit einer üblichen Netzfrequenz in Höhe von 50 Hz oder 60 Hz mit dem Drehstromgenerator erzeugen und in ein Stromnetz einspeisen zu können, muss der Turbinenläufer herkömmlich mit einer Betriebsfrequenz in Höhe von 50 Hz bzw. 60 Hz rotieren.

Da die Leistung und der Wirkungsgrad von Gasturbinen mit einer Betriebsfrequenz von 50 Hz (50Hz-Gasturbinen) größer sind als bei entsprechenden 60Hz-Gasturbinen, besteht ein Interesse daran, 50Hz-Gasturbinen auch zur Versorgung von Stromnetzen mit einer Netzfrequenz von 60 Hz (60Hz-Stromnetzen) einzusetzen.

Eine Aufgabe der Erfindung ist es, die Einsetzbarkeit von Turbinen, deren Betriebsfrequenz kleiner als die Netzfrequenz eines Stromnetzes ist, zum Versorgen des Stromnetzes mit elektrischer Energie zu ermöglichen.

Ein erfindungsgemäßer Drehstromgenerator für eine Anlage zum Erzeugen einer Dreiphasenwechselspannung umfasst einen zweipoligen Rotor mit zwei magnetischen Polen, wobei die magnetischen Pole bezüglich einer Rotordrehachse des Rotors ungleichmäßig umfangsversetzt zueinander angeordnet sind.

Durch die ungleichmäßige Umfangsversetzung der beiden magnetischen Pole des Rotors des erfindungsgemäßen Drehstromgenerators liegen die magnetischen Pole des Rotors nicht auf einer gemeinsamen senkrecht zu der Rotordrehachse des Rotors verlaufenden Achse, d.h. nicht in einem üblichen Polabstand von 180° zueinander. Stattdessen ist zwischen einer den einen magnetischen Pol mit der Rotordrehachse verbindenden Achse und einer den anderen magnetischen Pol mit der Rotordrehachse verbindenden Achse ein stumpfer oder spitzer Winkel angeordnet. Dies führt dazu, dass der eine magnetische Pol gegenüber dem anderen magnetischen Pol in Drehrichtung des Rotors mit einem gegenüber 180° verringerten oder vergrößerten Polabstand folgt. Hierdurch wird in einer Statorwicklung eines Stators des Drehstromgenerators ein gegenüber einer üblichen, annähernd sinusförmigen Schwingung relativ stark verzerrte Schwingung induziert. Diese Schwingung ist dadurch gekennzeichnet, dass die erste Halbwelle schneller oder langsamer abläuft als die zweite Halbwelle. Eine Fourier-Zerlegung dieser induzierten Spannung enthält verschiedene Schwingungsanteile in verschiedenen Frequenzbereichen. Je nach Netzfrequenz des jeweiligen Stromnetzes, in das die Dreiphasenwechselspannung eingespeist werden soll, können diejenigen Schwingungsanteile, die zu dieser Einspeisung nicht benötigt werden, insbesondere alle Schwingungsanteile außer der Schwingung, deren Frequenz der Netzfrequenz entspricht, durch eine geeignete Filterschaltung aus der induzierten Spannung herausgefiltert werden.

Zur Ausbildung des Rotors kann ein spezieller Rotor hergestellt werden. Alternativ kann auf einen herkömmlichen Rotor zurückgegriffen werden, an dem jedoch die Rotorwicklungen verändert werden, um eine ungleichmäßige Umfangsversetzung der magnetischen Pole des Rotors zu erreichen. Mechanisch kann ein solcher herkömmlicher Rotor durch geeignete Maßnahme symmetrisiert werden, beispielsweise indem eventuell vorhandene, nichtbewickelte Nuten des Rotors mit Ersatzkörpern ausgefüllt werden.

Der erfindungsgemäße Drehstromgenerator kann bei Anlagen zum Erzeugen einer Dreiphasenwechselspannung angewendet werden, bei denen die Betriebsfrequenz des Turbinenläufers bzw. die von der Turbine erzeugte Antriebsdrehzahl beliebig unter der Netzfrequenz des Stromnetzes, in das die Dreiphasenwechselspannung eingespeist werden soll, liegen kann. Hierbei ist lediglich der Polabstand zwischen den magnetischen Polen des Rotors an die jeweilige Differenz zwischen der Betriebsfrequenz des Turbinenläufers und der Netzfrequenz des Stromnetzes anzupassen.

Bei Einsatz des erfindungsgemäßen Drehstromgenerators kann beispielsweise eine 60Hz-Dreiphasenwechselspannung unter Verwendung einer den Rotor des Drehstromgenerators antreibenden 50Hz-Gasturbine erzeugt werden. Hierdurch können also 50Hz-Gasturbinen zur Versorgung von 60Hz-Stromnetzen eingesetzt werden. Alternativ kann entsprechend auch eine 50Hz-Dampfturbine zur Versorgung von 60Hz-Stromnetzen eingesetzt werden.

Die Leistung und der Wirkungsgrad einer mit einem erfindungsgemäßen Drehstromgenerator ausgestatteten Anlage sind gegenüber einer herkömmlichen 60Hz-Gasturbineneinheit höher. Da beispielsweise die maximale Leistung einer 50Hz-Gasturbine um 44 % größer ist als die maximale Leistung einer entsprechenden 60Hz-Gasturbine, können größere 60Hz-Kraftwerke mit weniger Blöcken aufgebaut werden. Beispielsweise können Kraftwerke, die bislang mit vier 60Hz-Gasturbinen-GuD-Strängen realisiert worden sind, bei Einsatz des erfindungsgemäßen Drehstromgenerators nun mit drei 50Hz-Gasturbinen-GuD-Strängen realisiert werden. Dadurch entfällt ein ganzer Strang bestehend aus Gasturbine, Geno, Schaltkupplung, Kessel, Dampfturbinen und Leittechnik, was zu einer enormen Kostenersparnis führt.

Die magnetischen Pole sind bevorzugt bezüglich der Rotordrehachse des Rotors derart ungleichmäßig umfangsversetzt zueinander angeordnet, dass ein Polwinkelabstand zwischen den magnetischen Polen in Drehrichtung des Rotors größer als 180° ist. Hierdurch läuft die erste Halbwelle einer in der Statorwicklung induzierten Spannungsschwingung schneller ab als die zweite Halbwelle der Spannungsschwingung.

Der Polwinkelabstand in Drehrichtung des Rotors beträgt vorzugsweise 210°. Hierbei kann beispielsweise der magnetische Südpol des Rotors gegenüber einer senkrecht zu der Rotordrehachse verlaufenden Achse, auf welcher der magnetische Nordpol des Rotors liegt, um 30° angewinkelt angeordnet sein. Dies führt dazu, dass der magnetische Südpol gegenüber dem magnetischen Nordpol in Gegendrehrichtung des Rotors schon mit einem Polabstand von 150° folgt. Die erste Halbwelle einer in der Statorwicklung induzierten Spannungsschwingung kann dann beispielsweise etwa einer 60Hz-Halbwelle entsprechen, wohingegen die zweite Halbwelle der Spannungsschwingung beispielsweise einer 40Hz-Halbwelle entsprechen kann. Eine Fourier-Zerlegung dieser induzierten Spannung enthält neben anderen Schwingungsanteilen eine 40Hz-, eine 50Hz- und eine 60Hz-Schwingung. Durch diese Ausgestaltung des Rotors wird in der Statorwicklung eine gegenüber einer üblichen, annähernd sinusförmigen 50Hz-Schwingung relativ stark verzerrte Schwingung induziert. Diese Schwingung ist dadurch gekennzeichnet, dass die erste Halbwelle der Schwingung schneller abläuft als die zweite Halbwelle. Um ein 60Hz-Stromnetz mit der Dreiphasenwechselspannung versorgen zu können, können alle Schwingungsanteile, die nicht benötigt werden, also alle Schwingungsanteile außer der 60Hz-Schwingung, durch eine geeignete Filterschaltung aus der induzierten Spannung herausgefiltert werden.

Bevorzugt umfasst der Drehstromgenerator einen Stator mit wenigstens einer gesehnten Statorwicklung. Durch eine geeignete Ausgestaltung der Sehnung der Statorwicklung können die im Luftspalt zwischen dem Rotor und einem Stator des Drehstromgenerators umlaufenden magnetischen Drehfelder gefiltert werden. Diese Filterung kann alternativ oder additiv auch durch eine geeignete anderweitige, insbesondere geometrische, Ausgestaltung der Statorwicklung erreicht werden. Durch diese Filterung können ungewünschte Schwingungsanteile in der mit dem Drehstromgenerator erzeugten Dreiphasenwechselspannung reduziert werden.

Bevorzugt ist der Stator ein 60Hz-Stator und der Rotor ein 50Hz-Rotor. Das bedeutet, dass der Stator ein Stator eines Drehstromgenerators ist, dessen Betriebsfrequenz 60 Hz beträgt, und dass der Rotor ein Rotor eines Drehstromgenerators ist, dessen Betriebsfrequenz 50 Hz beträgt. Der 50Hz-Rotor wird mit einer 50Hz-Turbine angetrieben.

Ein erfindungsgemäßes System zum Erzeugen einer Dreiphasenwechselspannung umfasst wenigstens einen Drehstromgenerator gemäß einer der vorgenannten Ausgestaltungen oder einer beliebigen Kombination von wenigstens zwei dieser Ausgestaltungen miteinander und wenigstens eine Filtereinheit, mit der Phasenspannungen einer von dem Drehstromgenerator erzeugten Dreiphasenwechselspannung filterbar sind.

Mit dem System sind die oben mit Bezug auf den Drehstromgenerator genannten Vorteile entsprechend verbunden. Die Filtereinheit kann eine Filterschaltung aufweisen, die an die von dem Drehstromgenerator erzeugte Dreiphasenwechselspannung und an die Netzfrequenz eines damit zu versorgenden Stromnetzes angepasst ist.

Die Filtereinheit umfasst bevorzugt pro Phase der von dem Drehstromgenerator erzeugten Dreiphasenwechselspannung einen Reihenschwingkreis. Jeder Reihenschwingkreis umfasst eine Kapazität und eine Induktivität, die auf die jeweilige Filterung abgestimmt sind, um dem jeweiligen Stromnetz eine Dreiphasenwechselspannung zuführen zu können, deren Frequenz der Netzfrequenz des Stromnetzes entspricht.

Eine erfindungsgemäße Anlage zum Erzeugen einer Dreiphasenwechselspannung umfasst wenigstens eine Turbine und wenigstens ein System gemäß einer der vorgenannten Ausgestaltungen oder einer beliebigen Kombination derselben, wobei ein Turbinenläufer der Gasturbine drehfest mit dem Rotor des Drehstromgenerators verbunden ist, und wobei eine Betriebsfrequenz des Turbinenläufers kleiner ist als eine Frequenz der mit der Filtereinheit gefilterten Dreiphasenwechselspannung.

Mit der Anlage sind die oben mit Bezug auf den Drehstromgenerator und das System genannten Vorteile entsprechend verbunden. Die Turbine kann eine Gasturbine oder eine Dampfturbine sein. Insbesondere kann die Turbine eine 50Hz-Turbine sein. Der Drehstromgenerator und die Filtereinheit können derart ausgebildet sein, dass bei einem mit 50 Hz drehenden Rotor des Drehstromgenerators eine 60Hz-Dreiphasenwechselspannung erzeugbar ist.

Im Folgenden wird die Erfindung unter Bezugnahme auf die anliegenden Figuren anhand bevorzugter Ausführungsformen beispielhaft erläutert, wobei die nachfolgend dargestellten Merkmale sowohl jeweils für sich genommen, als auch in unterschiedlicher Kombination miteinander einen Aspekt der Erfindung darstellen können. Es zeigen:
- Fig. 1: eine schematische Darstellung eines Ausführungsbeispiels für einen erfindungsgemäßen Drehstromgenerator;
- Fig. 2: eine schematische Darstellung eines Ausführungsbeispiels für eine erfindungsgemäße Anlage;
- Fig. 3: eine Darstellung von beispielhaften Spannungsverläufen einer 50Hz-Phasenspannung und einer induzierten Phasenspannung einer Dreiphasenwechselspannung.

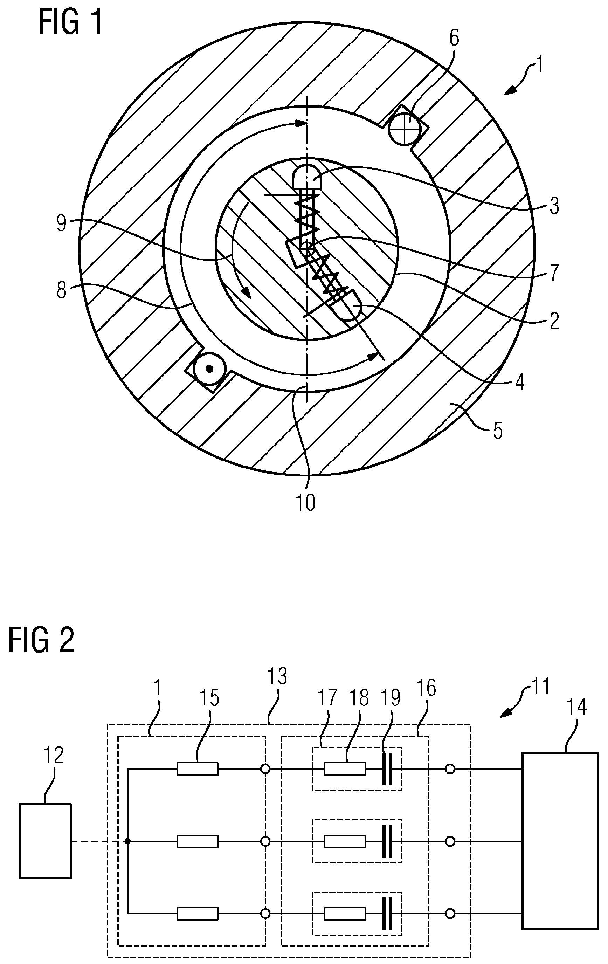

Fig. 1 zeigt eine schematische Querschnittsdarstellung eines Ausführungsbeispiels für einen erfindungsgemäßen Drehstromgenerator 1 für eine nicht gezeigte Anlage zum Erzeugen einer Dreiphasenwechselspannung.

Der Drehstromgenerator 1 umfasst einen zweipoligen Rotor 2 mit zwei magnetischen Polen 3 und 4, wobei der magnetische Pol 3 ein magnetischer Nordpol und der magnetische Pol 4 ein magnetischer Südpol ist. Der Drehstromgenerator 1 umfasst zudem einen Stator 5, der eine, insbesondere gesehnte, Statorwicklung 6 aufweist, in der durch die Drehung des Rotors 2 um seine Rotordrehachse 7 eine Spannung induziert wird. Der Stator 5 ist ein 60Hz-Stator und der Rotor 2 ist ein 50Hz-Rotor.

Die magnetischen Pole 3 und 4 sind bezüglich der Rotordrehachse 7 des Rotors 2 ungleichmäßig umfangsversetzt zueinander angeordnet. Insbesondere sind die magnetischen Pole 3 und 4 bezüglich der Rotordrehachse 7 des Rotors 2 derart ungleichmäßig umfangsversetzt zueinander angeordnet sind, dass ein Polwinkelabstand 8 zwischen den magnetischen Polen 3 und 4 in einer durch einen Pfeil 9 angedeuteten Drehrichtung des Rotors 2 größer als 180° ist. Insbesondere beträgt der Polwinkelabstand 8 in Drehrichtung des Rotors 2 in dem gezeigten Ausführungsbeispiel 210°. Es ist also der magnetische Pol 4 des Rotors 2 gegenüber einer senkrecht zu der Rotordrehachse 7 verlaufenden Achse 10, auf welcher der magnetische Pol 3 des Rotors 2 liegt, um 30° angewinkelt angeordnet. Daher folgt der magnetische Pol 4 gegenüber dem magnetischen Pol 3 in Gegendrehrichtung des Rotors 2 schon mit einem Polabstand von 150°. Die erste Halbwelle einer in der Statorwicklung 6 induzierten Spannungsschwingung entspricht etwa einer 60Hz-Halbwelle, wohingegen die zweite Halbwelle der Spannungsschwingung etwa einer 40Hz-Halbwelle entspricht. Die erste Halbwelle der Schwingung läuft schneller ab als die zweite Halbwelle. Eine Fourier-Zerlegung dieser induzierten Spannung enthält neben anderen Schwingungsanteilen eine 40Hz-, eine 50Hz- und eine 60Hz-Schwingung. Durch diese Ausgestaltung des Rotors 2 wird in der Statorwicklung 6 eine gegenüber einer üblichen, annähernd sinusförmigen 50Hz-Schwingung relativ stark verzerrte Schwingung induziert. Um ein 60Hz-Stromnetz mit einer 60Hz-Dreiphasenwechselspannung versorgen zu können, werden alle Schwingungsanteile, die nicht benötigt werden, also alle Schwingungsanteile außer der 60Hz-Schwingung, durch eine nicht gezeigte Filterschaltung aus der induzierten Spannung herausgefiltert.

Fig. 2 zeigt eine schematische Darstellung eines Ausführungsbeispiels für eine erfindungsgemäße Anlage 11 zum Erzeugen einer Dreiphasenwechselspannung.

Die Anlage 11 umfasst eine Turbine 12 in Form einer 50Hz-Gasturbine. Des Weiteren umfasst die Anlage 11 ein System 13 zum Erzeugen der Dreiphasenwechselspannung. Das System 13 ist mit einem 60Hz-Stromnetz 14 verbunden, in das die 60Hz-Dreiphasenwechselspannung eingespeist werden soll.

Das System 13 umfasst einen Drehstromgenerator 1, der gemäß Fig. 1 ausgebildet sein kann. Von dem Drehstromgenerator 1 ist in Fig. 2 lediglich eine Statorschaltplan mit drei die Ständerwicklung repräsentierenden Wicklungswiderständen 15 gezeigt. Ein nicht gezeigter Turbinenläufer der Turbine 12 ist drehfest mit dem nicht gezeigten Rotor des Drehstromgenerators 1 verbunden.

Des Weiteren umfasst die Anlage eine Filtereinheit 16, mit der von dem Drehstromgenerator 1 erzeugte Phasenspannungen filterbar sind. Die Filtereinheit 16 umfasst pro Phase der von dem Drehstromgenerator 1 erzeugten Dreiphasenwechselspannung einen Reihenschwingkreis 17. Jeder Reihenschwingkreis 17 umfasst eine Induktivität 18 und eine Kapazität 19. Eine Betriebsfrequenz des Turbinenläufers ist kleiner als eine Frequenz der mit der Filtereinheit 16 gefilterten Dreiphasenwechselspannung.

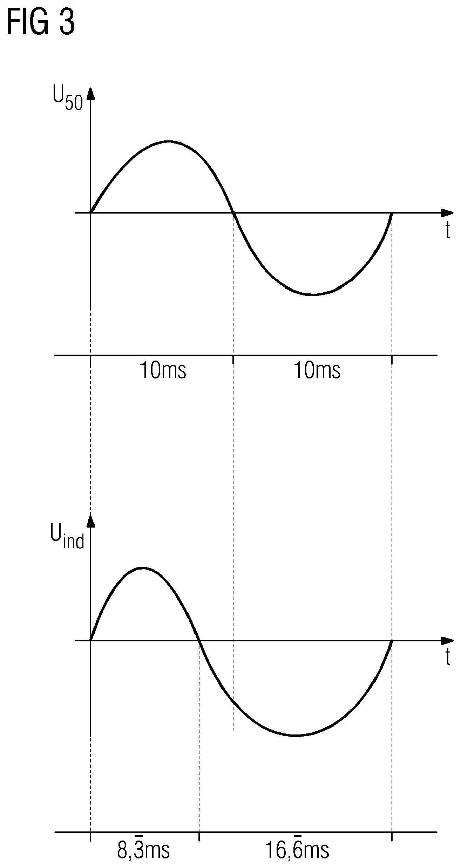

Fig. 3 zeigt eine Darstellung von beispielhaften Spannungsverläufen einer 50Hz-Phasenspannung U₅₀(t) (oberer Teil von Fig. 3) und einer induzierten Phasenspannung U_{ind}(t) einer Dreiphasenwechselspannung (unterer Teil von Fig. 3). Die beiden Halbwellen der gezeigten Schwingung der 50Hz-Phasenspannung U₅₀(t) sind gleich lang und haben jeweils eine Dauer von 10 ms. Die in der Statorwicklung des Drehstromgenerators induzierte Phasenspannung U_{ind}(t) kann mit einer Anlage gemäß Fig. 2 erzeugt werden. Die erste Halbwelle der gezeigten Schwingung der Phasenspannung U_{ind}(t) läuft in 8,3 ms ab, während die zweite Halbwelle der Schwingung in 16,6 ms abläuft, so dass die erste Halbwelle schneller abläuft als die zweite Halbwelle. Die erste Halbwelle entspricht etwa einer 60Hz-Halbwelle, wohingegen die zweite Halbwelle etwa einer 40Hz-Halbwelle entspricht. Eine Fourier-Zerlegung dieser induzierten Phasenspannung U_{ind}(t) enthält neben anderen Schwingungsanteilen eine 40Hz-, eine 50Hz- und eine 60Hz-Schwingung. Es wird also in der Statorwicklung eine gegenüber einer üblichen, annähernd sinusförmigen 50Hz-Schwingung relativ stark verzerrte Schwingung induziert. Um ein 60Hz-Stromnetz mit einer 60Hz-Dreiphasenwechselspannung versorgen zu können, werden alle Schwingungsanteile, die nicht benötigt werden, also alle Schwingungsanteile außer der 60Hz-Schwingung, durch eine nicht gezeigte Filterschaltung aus der induzierten Phasenspannung U_{ind}(t) herausgefiltert. Hierzu kann beispielsweise eine Filtereinheit entsprechend Fig. 2 eingesetzt werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Drehstromgenerator (1) für eine Anlage (11) zum Erzeugen einer Dreiphasenwechselspannung,
aufweisend einen zweipoligen Rotor (2) mit zwei magnetischen Polen (3, 4), **dadurch gekennzeichnet, dass** die magnetischen Pole (3, 4) bezüglich einer Rotordrehachse (7) des Rotors (2) ungleichmäßig umfangsversetzt zueinander angeordnet sind.

2. Drehstromgenerator (1) gemäß Anspruch 1,
wobei die magnetischen Pole (3, 4) bezüglich der Rotordrehachse (7) des Rotors (2) derart ungleichmäßig umfangsversetzt zueinander angeordnet sind, dass ein Polwinkelabstand (8) zwischen den magnetischen Polen (3, 4) in Drehrichtung des Rotors (2) größer als 180° ist.

3. Drehstromgenerator (1) gemäß Anspruch 2,
wobei der Polwinkelabstand (8) in Drehrichtung des Rotors (2) 210° beträgt.

4. Drehstromgenerator (1) gemäß einem der Ansprüche 1 bis 3,
aufweisend einen Stator (5) mit wenigstens einer gesehnten Statorwicklung (6).

5. Drehstromgenerator (1) gemäß Anspruch 4,
wobei der Stator (5) ein 60Hz-Stator und der Rotor (2) ein 50Hz-Rotor ist.

6. System (13) zum Erzeugen einer Dreiphasenwechselspannung,
**gekennzeichnet durch** wenigstens einen Drehstromgenerator (1) gemäß einem der Ansprüche 1 bis 5 und wenigstens eine Filtereinheit (16), mit der Phasenspannungen einer von dem Drehstromgenerator (1) erzeugten Dreiphasenwechselspannung filterbar sind.

7. System (13) gemäß Anspruch 6,
wobei die Filtereinheit (16) pro Phase der von dem Drehstromgenerator (1) erzeugten Dreiphasenwechselspannung einen Reihenschwingkreis (17) aufweist.

8. Anlage (11) zum Erzeugen einer Dreiphasenwechselspannung,
aufweisend wenigstens eine Turbine (12), **gekennzeichnet durch** wenigstens ein System (13) gemäß Anspruch 6 oder 7, wobei ein Turbinenläufer der Turbine (12) drehfest mit dem Rotor (2) des Drehstromgenerators (1) verbunden ist, wobei eine Betriebsfrequenz des Turbinenläufers kleiner ist als eine Frequenz der mit der Filtereinheit (16) gefilterten Dreiphasenwechselspannung.
